# EUROPEAN PATENT SPECIFICATION

(11) **EP 3 978 297 B1**
(45) Date of publication and mention of the grant of the patent: **26.10.2022**
(21) Application number: 21173035.3
(22) Date of filing: 10.05.2021
(51) Int. Cl.: B60K 37/06

(54) **DISPLAY SYSTEM AND VEHICLE**
ANZEIGESYSTEM UND FAHRZEUG
SYSTÈME D'AFFICHAGE ET VÉHICULE

(30) Priority: 30.09.2020 JP 2020166176
(43) Date of publication of application: 06.04.2022
(73) Proprietor: Yamaha Hatsudoki Kabushiki Kaisha, Iwata-shi, Shizuoka 438-8501 (JP)
(72) Inventor: SUGIYAMA, Yuichi, Iwata-shi, 438-8501 (JP)
(74) Representative: Grünecker Patent- und Rechtsanwälte PartG mbB

(56) References cited:
- WO-A1-2019/155864

## Description

The present invention relates to a display system.

JP-A-2017-171277 discloses a motorcycle display system in which a motorcycle is equipped with a display unit on which infotainment information is displayed and an analog meter unit on which vehicle running information is displayed.

Incidentally, in the motorcycle display system disclosed in JP-A-2017-171277, since the meter unit and the display unit are installed separately in the vehicle, the rider needs to move his or her line of sight to a large extent in checking both of infotainment information and vehicle running information. As such, this display system has room for improvement in terms of its usability.

The document WO 2019/155864 A1 discloses a display system configured to be installed in a straddled vehicle, the display system comprising:a display unit; and a communication unit configured to be communicably paired to a portable terminal.

It is an object of the present invention to provide a display system that can increase the usability thereof. According to the present invention said object is solved by display system having the features of independent claim 1. Preferred embodiments are laid down in the dependent claims.

According to the present invention, there is provided a display system which is to be installed in a straddled vehicle. The display system includes: a display unit; and a communication unit which is communicably connected to a portable terminal. The display system is configured to: switch a display mode of the display unit to a first display mode or a second display mode in response to an operation performed by a rider on a handle switch of the vehicle; display a meter display picture representing running information of the vehicle on the display unit in the first display mode; and display the meter display picture and a launcher display picture on the display unit in the second display mode. At least a portion of a plurality of icons is displayed in the launcher display picture so as to be arranged in a certain direction. Each of the icons is associated with a function of the portable terminal or a function of the vehicle.

According to this configuration, the display mode of the display unit can be switched to the first display mode in which the meter display picture is displayed or the second display mode in which the meter display picture and the launcher display picture are displayed in response to an operation performed by a rider on the handle switch. The usability of the display system can be increased because the launcher display picture in which icons each of which is associated with a function of the portable terminal or a function of the vehicle are displayed can be displayed on the display unit.

The display system may switch the display mode of the display unit to the first display mode or the second display mode in response to one operation performed by the rider on the handle switch.

According to this measure, the display system can be increased in convenience and operability because the display mode of the display unit is switched in response to one operation performed by the rider on the handle switch.

The certain direction may be a circumferential direction.

According to this measure, since the plural icons are displayed so as to be arranged in the circumferential direction, the rider can infer that there would exist icons that are not displayed currently in the launcher display picture.

When the display mode is switched from the first display mode to the second display mode, the launcher display picture may be superimposed on the meter display picture such that a display area of the meter display picture is kept approximately the same as in the first display mode.

With this measure, when the display mode is switched from the first display mode to the second display mode, the launcher display picture is superimposed on the meter display picture such that the display area of the meter display picture is kept approximately the same. This alleviates strangeness that the rider may be given at the time of switching of the display mode.

When the display mode is switched from the first display mode to the second display mode, the launcher display picture may be superimposed on the meter display picture such that a speed display region, in which speed information of the vehicle is displayed, of the meter display picture is kept as it is.

With this measure, when the display mode is switched from the first display mode to the second display mode, the launcher display picture is superimposed on the meter display picture such that the speed display region is kept as it is. This alleviates strangeness that the rider may be given at the time of switching of the display mode.

When the display mode is switched from the first display mode to the second display mode, display positions of running information of the vehicle other than the speed information of the vehicle in the meter display picture may be changed.

With this measure, the rider would not be given much strangeness even if the display positions of vehicle running information other than speed information (e.g., the display position of a residual fuel amount display region) are changed.

The icons may include one or more icons that are displayed in the launcher display picture (130) and one or more icons that are not displayed in the launcher display picture.

According to this measure, the visibility of the icons displayed in the launcher display picture is increased because only part of all the icons are display in the launcher display picture. Furthermore, it is expected that the number of icons to be displayed in the launcher display picture varies depending on the type of the vehicle in which the display system is installed. Even in such a case, since only part (e.g., three icons) of all the icons are displayed in the launcher display picture, it is not necessary to change the layout of the launcher display picture according to the type of the vehicle.

The display system may change the icons displayed in the launcher display picture by moving the icons in the certain direction in response to an operation performed by the rider on the handle switch.

According to this measure, the icons displayed in the launcher display picture can be moved in the prescribed direction by the rider's manipulating the handle switch. As a result, the operability of the display system can be increased.

An icon currently selected by the rider may be displayed at the center of the launcher display picture in a horizontal direction of the display unit.

According to this measure, the visibility of the icon currently selected by the rider is increased because the icon currently selected is displayed at the center of the launcher display picture in the horizontal direction of the display unit.

An icon currently selected by the rider may be opposed to a speed display region in which speed information of the vehicle is displayed in a vertical direction of the display unit.

According to this measure, the visibility of the icon currently selected by the rider is increased because the icon currently selected is opposed to the speed display region in the vertical direction of the display unit.

A first icon currently selected by the rider, a second icon that was selected by the rider last time, and a third icon to be selected by the rider next time may be displayed so as to be arranged in the certain direction in the launcher display picture.

According to this measure, the operability of the display system is increased because the first icon currently selected by the rider, the second icon that was selected by the rider last time, and the third icon to be selected by the rider next time are displayed in the launcher display picture.

The first icon may be disposed between the second icon and the third icon.

With this measure, the first icon is disposed between the second icon and the third icon. This allows the rider to recognize, intuitively, the icon selected currently, the icon that was selected last time, and the icon to be selected next time, whereby the operability of the display system is increased.

The display system may display the first icon in an emphasized manner in the second display mode.

This measure allows the rider to immediately recognize the first icon which is selected currently.

When the display mode is switched from the first display mode to the second display mode, the launcher display picture may be slid into the meter display picture.

This measure allows the rider to immediately recognize that the display mode of the display unit has been switched from the first display mode to the second display mode by seeing the slide-in operation of the launcher display picture.

When the display mode is switched from the second display mode to the first display mode, the launcher display picture may be slid out from the meter display picture.

This measure allows the rider to immediately recognize that the display mode of the display unit has been switched from the second display mode to the first display mode by seeing the slide-out operation of the launcher display picture.

When the handle switch has not been operated by the rider for a certain period in the second display mode, the display mode may be switched automatically from the second display mode to the first display mode.

According to this measure, the operability of the display system is increased because the display mode is switched automatically from the second display mode to the first display mode if the handle switch has not been operated by the rider for the prescribed period.

The icons may be associated with different functions.

According to this measure, the operability of the display system is increased because the plural icons are correlated with different functions.

There is provided a straddled vehicle including the display system.

### BRIEF DESCRIPTION OF DRAWINGS

Fig. 1 is a view showing a front portion of a straddled vehicle which is equipped with a display system according to an embodiment;
Fig. 2 is a system configuration diagram of the straddled vehicle including the display system according to the embodiment;
Fig. 3 is a rough diagram showing an example configuration of a handle switch;
Fig. 4 shows an example meter display picture displayed on the screen of a display unit;
Fig. 5 shows an example of a meter display picture and a launcher display picture displayed on the screen of the display unit;
Fig. 6 shows how icons displayed in a launcher display picture are moved;
Fig. 7 also shows how icons displayed in a launcher display picture are moved;
Fig. 8 shows an example of a currently selected icon that is emphasized; and
Fig. 9 shows an example of a meter display picture and a call arrival notification picture displayed on the screen of the display unit.

### DETAILED DESCRIPTION OF EMBODIMENT

An embodiment of the present teaching will be hereinafter described with reference to the drawings. For convenience of description, dimensions of each of members shown in the drawings may be different from those of an actual member.

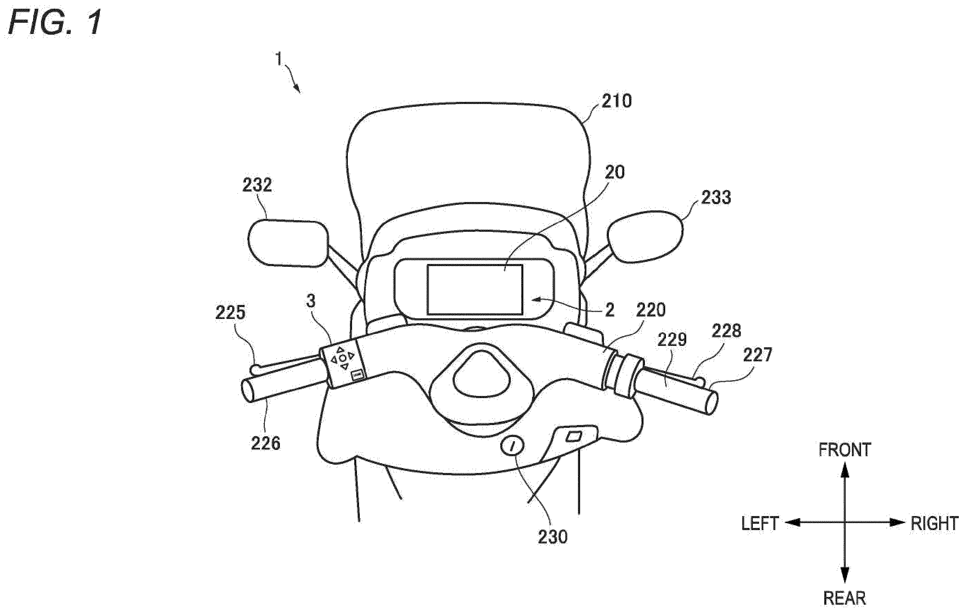

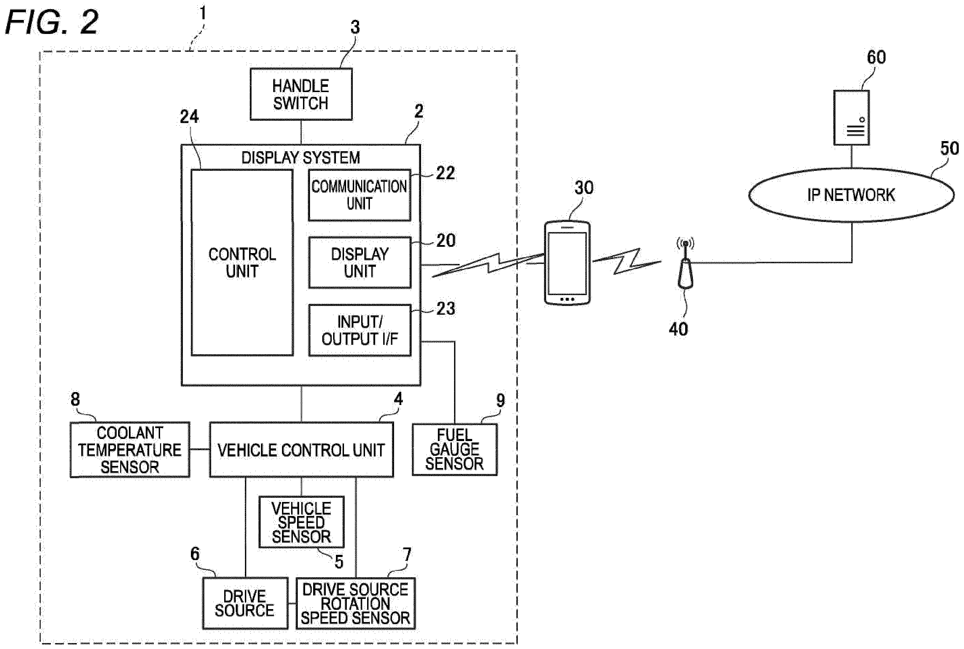

First, the configuration of a straddled vehicle 1 (hereinafter simply referred to as a "vehicle 1") which is equipped with a display system 2 according to the embodiment will be described with reference to Figs. 1 and 2. Fig. 1 is a view showing a front portion of the vehicle 1 which is equipped with the display system 2. Fig. 2 is a system configuration diagram of the vehicle 1 including the display system 2.

As shown in Fig. 1, the vehicle 1 is, for example, a motorcycle that can turn when the rider inclines the vehicle body. The vehicle 1 includes the display system 2 for presenting running information of the vehicle 1 and infotainment information to the rider. The display system 2 includes a display unit 20. The display unit 20 is disposed between a windscreen 210 and a handlebar 220 in the front-rear direction of the vehicle 1 and between a left side mirror 232 and a right side mirror 233 in the left-right direction of the vehicle 1.

The handlebar 220 has a left handle 226 and a right handle 227. The left handle 226 is equipped with a handle switch 3 and a brake lever 225. The right handle 227 is equipped with a throttle grip 229 which functions as an accelerator and a brake lever 228. A main switch key unit 230 for turning on or off driving of the vehicle 1 is provided below the handlebar 220.

Although the vehicle 1 shown in Fig. 1 is a scooter-type motorcycle, the vehicle 1 is not limited thereto, that is, the vehicle 1 may be a motorcycle of another type. Furthermore, the vehicle 1 is not limited to a two-wheel motorcycle and may be a straddled three-wheel or four-wheel vehicle.

Next, the system configuration of the vehicle 1 will be described with reference to Fig. 2. For convenience of description, Fig. 2 shows some of the elements of the vehicle 1. As shown in Fig. 2, the vehicle 1 includes the display system 2, the handle switch 3, a vehicle control unit 4, a vehicle speed sensor 5, a drive source 6, a drive source rotation speed sensor 7, a coolant temperature sensor 8, and a fuel gauge sensor 9. The display system 2 includes the display unit 20, a communication unit 22, an input/output interface 23, and a control unit 24.

The display system 2 is configured to display running information (e.g., speed information etc.) of the vehicle 1 after receiving running information data of the vehicle 1 from the vehicle control unit 4. Furthermore, the display system 2 is configured to receive infotainment information from a portable terminal 30 being carried by the rider and to display the received infotainment information. The display system 2 may be configured to transmit, to the portable terminal 30, running information data of the vehicle 1 received from the vehicle control unit 4. The display system 2 may be communicably connected to the portable terminal 30 according to such a standard as SDL (Smart Device Link; registered trademark).

As described above, the display unit 20 is disposed in a front portion of the vehicle 1. For example, the display unit 20 is a liquid crystal display or an organic EL display. The communication unit 22 is connected to the portable terminal 30 so as to be able to communicate with it. For example, the communication unit 22 may be a wireless communication unit that is communicably connected to the portable terminal 30 by radio. The wireless communication unit may be equipped with a radio frequency circuit (RF circuit) and a transmission/reception antenna and communicably connected to the portable terminal 30 according to a wireless communication standard such as WiFi (registered trademark) or Bluetooth (registered trademark). The communication unit 22 may be connected to the portable terminal 30 by a cable such as a USB cable.

The portable terminal 30 is, for example, a smartphone, a cellphone, or a wearable device. The portable terminal 30 is communicably connected to a wireless base station 40 by radio. More specifically, the portable terminal 30 may be equipped with a SIM card for data communication and communicably connected to a wireless base station 40 via a fourth-generation (4G) or fifth-generation (5G) mobile communication system. The portable terminal 30 is connected to an external server 60 via a wireless base station 40, a core network (not shown) for portable terminals, and an IP (Internet Protocol) network 50. For example, the portable terminal 30 may receive infotainment information (e.g., map information, musical information, message information, or weather information) and transmit the received infotainment information to the display system 2. On the other hand, the portable terminal 30 may receive running information of the vehicle 1 from the display system 2 and transmit the received running information of the vehicle 1 to the external server 60. The portable terminal 30 may be equipped with a GPS (Global Positioning System) for receiving current position information of the portable terminal 30. The portable terminal 30 may transmit, to the display system 2, map information received from the external server 60 and current position information acquired by the GPS.

The input/output interface 23 is configured to connect the display system 2 to external devices (e.g., handle switch 3 and vehicle control unit 4). For example, the vehicle control unit 4 is connected to the input/output interface 23 by a communication table such as a CAN table.

The control unit 24 is configured to control the individual elements of the display system 2. The control unit 24 includes a computer system including one or more processors and one or more memories and an electronic circuit including active elements and passive elements. For example, the processor includes at least one of a CPU (central processing unit), an MPU (micro processing unit), and a GPU (graphic processing unit). The memory or memories include a ROM (read-only memory) and a RAM (random access memory). The RAM may include a VRAM (video RAM). The ROM may include a flash memory. The processor may be configured to develop control programs stored in the ROM on the RAM and to execute various kinds of processing by cooperating with the RAM. The computer system may include an ASIC (application-specific integrated circuit) or an FPGA (field-programmable gate array).

The control unit 24 receives running information of the vehicle 1 from the vehicle control unit 4 and displays the received running information on the display unit 20. Furthermore, the control unit 24 receives infotainment information from the portable terminal 30 and displays the received infotainment information on the display unit 20. More specifically, in case where the display mode of the display system 2 is a projection mode, the control unit 24 sends image data received from the portable terminal 30 to the display unit 20. In this case, the control unit 24 may adjust the image data received from the portable terminal 30 and sends the adjusted image data to the display unit 20. On the other hand, in case where the display mode of the display system 2 is a template mode, the control unit 24 generates image data on the basis of infotainment information received from the portable terminal 30 and template image data stored in the ROM and sends the generated image data to the display unit 20.

The display system 2 shown in Fig. 2 may be implemented as either a single module or two or more separate modules.

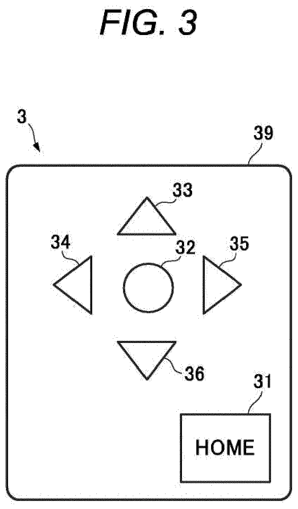

The handle switch 3, which is provided on the left handle 226, is configured to generate an operation signal corresponding to an operation of the rider and to send the generated operation signal to the control unit 24 via the input/output interface 23. As shown in Fig. 3, the handle switch 3 may include a housing 39, a home button 31, an enter button 32, a leftward button 34, a rightward button 35, an upward button 33, and a downward button 36. It is noted that the configuration of the handle switch 3 shown in Fig. 3 is an example.

The vehicle control unit 4 is configured to control running of the vehicle 1. In particular, the vehicle control unit 4 is configured to control the drive source 6 on the basis of an accelerator operation signal or a brake operation signal that is output from an HMI (human machine interface) such as a throttle grip or a brake lever. For example, the vehicle control unit 4 consists of at least one electronic control unit (ECU). The ECU may include a computer system including one or more processors and one or more memories and an electronic circuit including active elements and passive elements. The vehicle control unit 4 is configured to send detection signals that are output from various sensors installed in the vehicle 1 to the display system 2 via a CAN communication cable.

The vehicle speed sensor 5 is configured to detect a speed of the vehicle 1 and to send a detection signal indicating the detected speed of the vehicle 1 to the vehicle control unit 4. The drive source rotation speed sensor 7 is configured to detect a rotation speed of the drive source 6 and to send a detection signal indicating the detected rotation speed of the drive source 6 to the vehicle control unit 4. The drive source 6 is configured to generate drive power for the vehicle 1 and is an engine and/or a motor.

The coolant temperature sensor 8 is configured to detect a temperature of coolant for cooling the drive source 6 and to send a detection signal indicating the detected temperature of the coolant to the vehicle control unit 4. In case where the drive source 6 is not a water-cooled engine, the vehicle 1 need not be equipped with the coolant temperature sensor 8. In this case, the vehicle 1 may be equipped with an engine temperature sensor that is configured to detect an engine temperature in place of the coolant temperature sensor 8.

The fuel gauge sensor 9 is configured to detect a residual fuel amount (e.g., a residual amount of gasoline) for the drive source 6 and to send a detection signal indicating the detected residual fuel amount to the display system 2. In case where the drive source 6 is a motor, the vehicle 1 may be equipped with a residual battery energy sensor for detecting residual battery energy in place of the fuel gauge sensor 9.

### (Meter display picture 100 and launcher display picture 130)

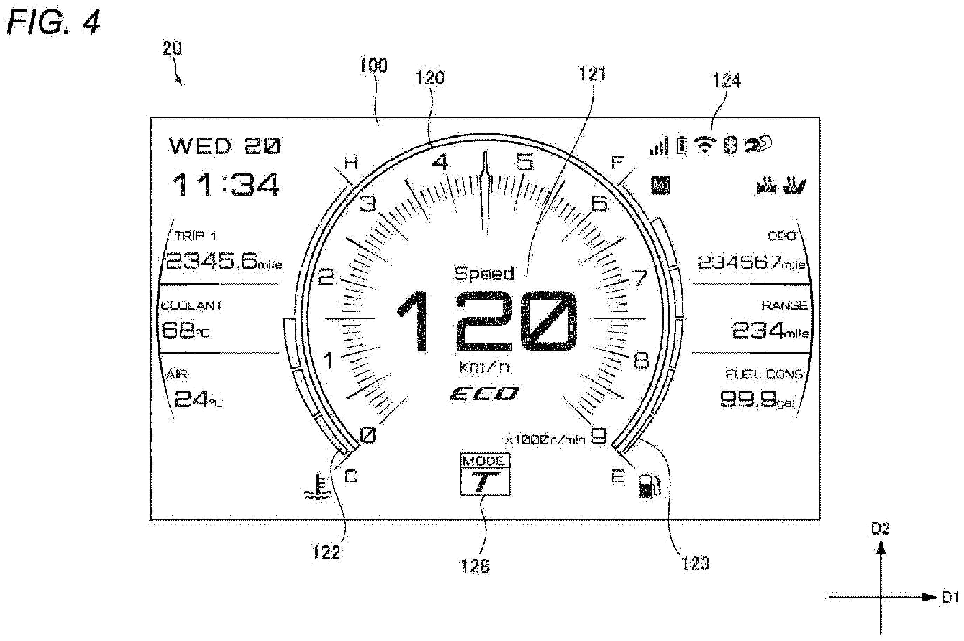

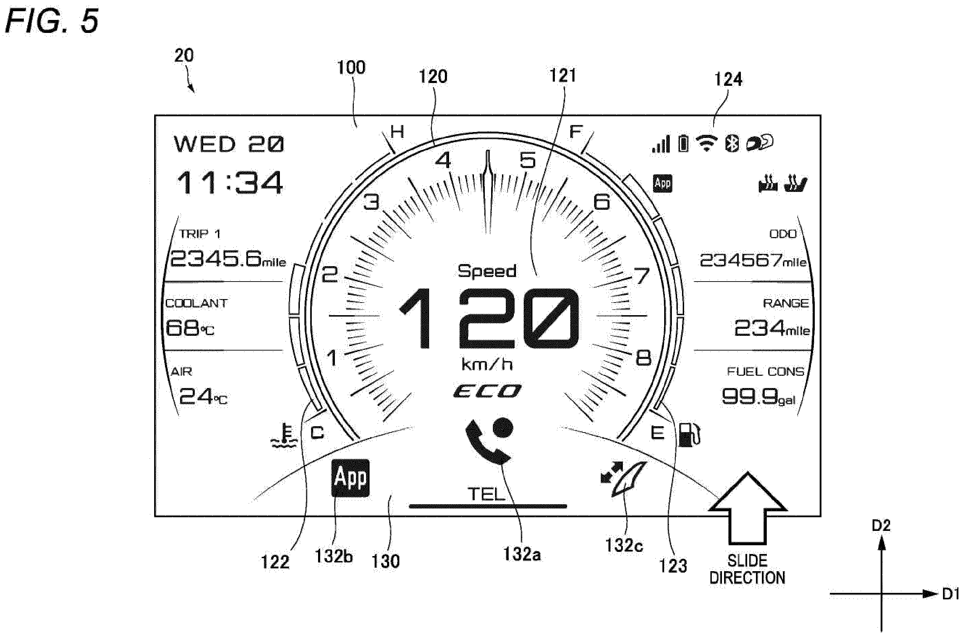

Next, a meter display picture 100 and a launcher display picture 130 to be displayed on the display unit 20 will be described below with reference to Figs. 4 and 5. Fig. 4 shows an example meter display picture 100 displayed on the screen of the display unit 20. Fig. 5 shows an example meter display picture 100 and an example launcher display picture 130 displayed on the screen of the display unit 20.

In the following description, reference may be made to a horizontal (first) direction D1 and a vertical (second) direction D2 of the screen of the display unit 20 when necessary. It is assumed that the horizontal direction D1 and the vertical direction D2 are perpendicular to each other. The horizontal direction D1 and the vertical direction D2 of the screen of the display unit 20 refers to the view of the rider sitting on the straddled vehicle. The horizontal direction D1 may be either parallel with or not parallel with the left-right direction of the vehicle 1 (see Fig. 1). In the following description, what controls the display system 2 is the control unit 24.

First, a description will be made of the meter display picture 100 shown in Fig. 4. The meter display picture 100 is an initial picture to be displayed on the display unit 20. The meter display device 13 displays, on the display unit 20, a meter display picture 100 representing running information (e.g., vehicle speed information and rotation speed information of the drive source 6) of the vehicle 1. As shown in Fig. 4, a speedometer 121 indicating speed information of the vehicle 1 and a tachometer 120 indicating a rotation speed of the drive source 6 are displayed in the meter display picture 100.

A coolant temperature meter 122 indicating a temperature of coolant, a residual fuel meter 123 indicating a residual fuel amount for the drive source 6, and a drive mode display mark 128 indicating a drive mode of the vehicle 1 are further displayed in the meter display picture 100. Plural status bar icons 124 may be displayed in the meter display picture 100. As shown in Fig. 4, the status bar icons 124 may include information (e.g., a communication state of the portable terminal 30 and residual battery energy) relating to the portable terminal 30 connected to the display system 2.

Although as shown in Fig. 4 other meters such as an odometer indicating a running distance of the vehicle 1 are displayed in the meter display picture 100, descriptions of those meters will be omitted here.

If the rider presses the home button 31, as shown in Fig. 5 a meter display picture 100 and a launcher display picture 130 are displayed on the screen of the display unit 20. That is, the control unit 24 switches the display mode of the display unit 20 from a first display mode shown in Fig. 4 to a second display mode shown in Fig. 5 in response to one operation (e.g., one short push operation) performed on the home button 31 by the rider. In the second display mode of the display unit 20, a meter display picture 100 and a launcher display picture 130 are displayed on the screen of the display unit 20 as shown in Fig. 5.

When the display mode of the display unit 20 is switched from the first display mode to the second display mode, the launcher display picture 130 slides into the meter display picture 100 in the vertical direction D2. The slide-in operation of the launcher display picture 130 allows the rider to immediately recognize the switching of the display mode of the display unit 20 from the first display mode to the second display mode.

The launcher display picture 130 is superimposed on the meter display picture 100 in such a manner that the display area of the meter display picture 100 is kept approximately the same as in the first display mode. More specifically, as shown in Figs. 4 and 5, the launcher display picture 130 is superimposed on the meter display picture 100 in such a manner that the display region (an example of the term "speed display region") of the speedometer 121 and the display region of the tachometer 120 are kept as they are. On the other hand, the display positions of the coolant temperature meter 122 and the residual fuel meter 123 are changed and the drive mode display mark 128 is hidden by the launcher display picture 130. More specifically, the coolant temperature meter 122 and the residual fuel meter 123 are moved toward the top edge of the screen of the display unit 20.

If the home button 31 is operated again by the rider in a state that the display mode of the display unit 20 is the second display mode, the display mode of the display unit 20 is switched from the second display mode shown in Fig. 5 to the first display mode shown in Fig. 4. That is, the control unit 24 switches the display mode of the display unit 20 from the second display mode shown in Fig. 5 to the first display mode shown in Fig. 4 in response to one short push operation by the rider on the home button 31.

When the display mode is switched from the second display mode to the first display mode, the launcher display picture 130 slides out from the meter display picture 100 in the vertical direction D2. The slide-out operation of the launcher display picture 130 allows the rider to immediately recognize the switching of the display mode of the display unit 20 from the second display mode to the first display mode.

If the handle switch 3 has not been operated by the rider for a certain period (e.g., 5 sec) in the second display mode, the display mode may be switched automatically from the second display mode to the first display mode. The operability of the display system 2 is increased because the display mode is switched from the second display mode to the first display mode if the handle switch 3 has not been operated by the rider for the certain period.

As shown in Fig. 5, three icons are displayed in the launcher display picture 130 so as to be arranged in the circumferential direction (an example of the term "certain direction"). Each of plural icons displayed in the launcher display picture 130 is associated with a function of the portable terminal 30 or a function of the vehicle 1. That is, the plural icons displayed in the launcher display picture 130 are associated with different functions.

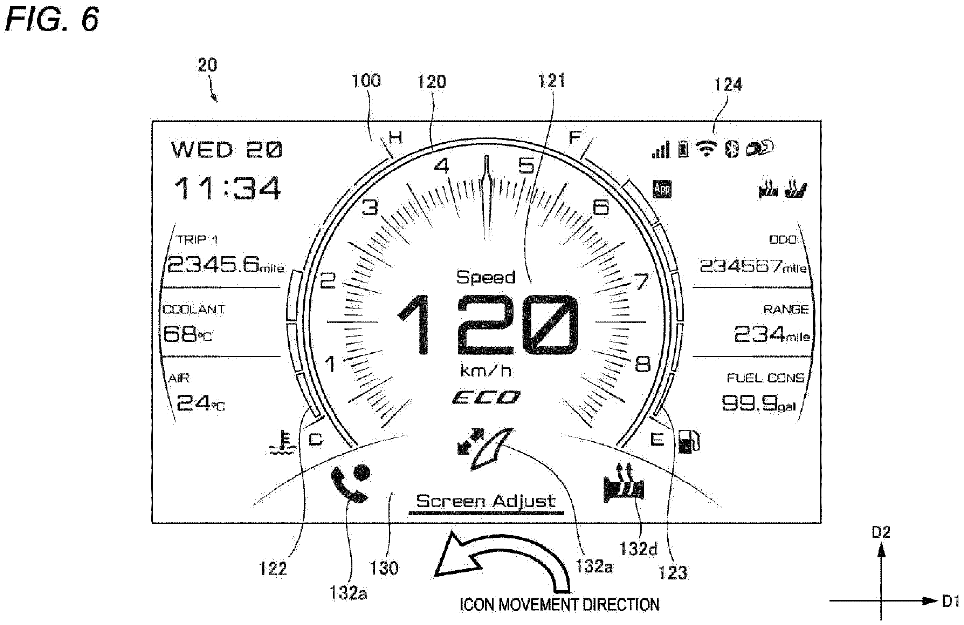

More specifically, in the launcher display picture 130 shown in Fig. 5, three icons 132a-132c are arranged in the circumferential direction. The icon 132a is an icon relating to the telephone function of the portable terminal 30. The icon 132b is an icon relating to information of applications installed in the memory of the portable terminal 30. The icon 132c is an icon relating to the height adjustment of the windscreen 210 (see Fig. 1) of the vehicle 1. For example, if the enter button 32 of the handle switch 3 is operated by the rider in a state that the icon 132a is selected as shown in Fig. 5, a display picture indicating information relating to the telephone function of the portable terminal 30 is displayed on the screen of the display unit 20. If the upward button 33 of the handle switch 3 is operated by the rider in a state that the icon 132b is selected as shown in Fig. 6, the windscreen 210 can be elevated. On the other hand, if the downward button 36 of the handle switch 3 is operated by the rider in a state that the icon 132c is selected, the windscreen 210 can be lowered.

In the launcher display picture 130, the icon 132a that is selected by the rider currently is displayed at the center of the launcher display picture 130 in the horizontal direction D2. Furthermore, the icon 132a selected by the rider currently is opposed to the display region of the speedometer 121 of the meter display picture 100 in the vertical direction D1. As a result, the visibility of the icon 132a selected by the rider currently is increased.

Whereas only three icons (in Fig. 5, the icons 132a-132c) among all icons that can be displayed in the launcher display picture 130 are actually displayed in the launcher display picture 130, the remaining icons are not displayed currently in the launcher display picture 130. Since in this manner only three of all the icons are displayed in the launcher display picture 130, the visibility of the icons displayed in the launcher display picture 130 is increased. Furthermore, since the three icons are displayed so as to be arranged in the circumferential direction, the rider can infer that there would exist icons that are not displayed currently in the launcher display picture 130. On the other hand, it is expected that the number of icons to be displayed in the launcher display picture 130 varies depending on the type of the vehicle 1 in which the display system 2 is installed. Even in such a case, since only some (in this example, three icons) of all the icons are displayed in the launcher display picture 130, it is not necessary to change the layout of the launcher display picture 130 according to the type of the vehicle 1.

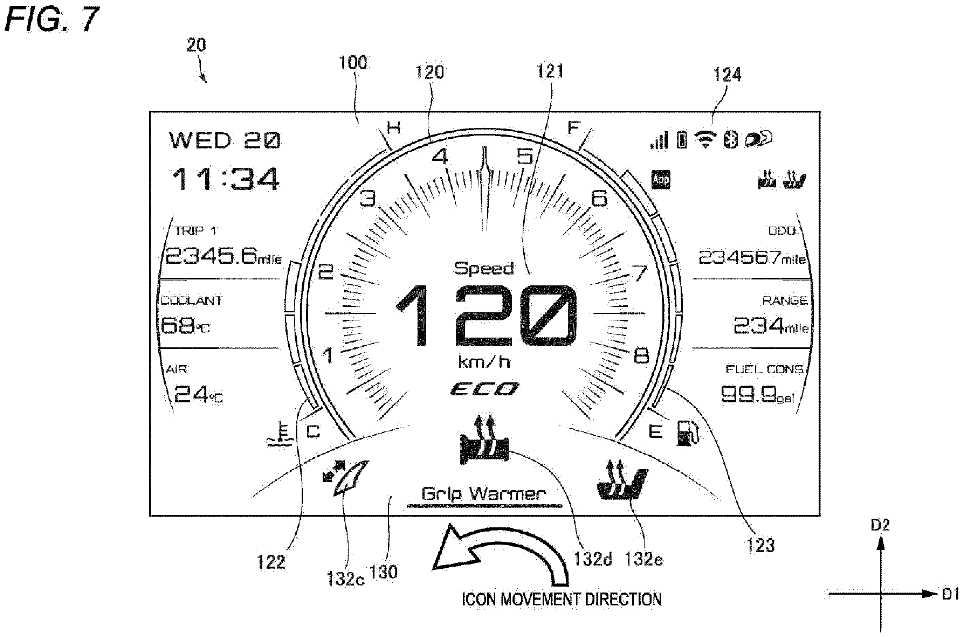

Next, how icons displayed in the launcher display picture 130 are moved will be described with reference to Figs. 5-7. Figs. 6 and 7 show how icons displayed in the launcher display picture 130 are moved.

If the rightward button 35 of the handle switch 3 is pressed by the rider in a state that the icon 132a is selected currently as shown in Fig. 5, the icon selected by the rider currently is switched from the icon 132a to the icon 132c. In this case, as shown in Fig. 6, the icons displayed in the launcher display picture 130 are moved counterclockwise in the circumferential direction. In particular, whereas the icon 132b shown in Fig. 5 is slid out from the launcher display picture 130, an icon 132d (see Fig. 6) relating to temperature adjustment of handle grips is slid into the launcher display picture 130. Furthermore, the icon 132c that has been newly selected by the rider comes to be located at the center of the launcher display picture 130 in the horizontal direction D1.

Furthermore, if the rightward button 35 of the handle switch 3 is pressed by the rider in a state that the icon 132c is selected currently as shown in Fig. 6, the icon selected by the rider currently is switched from the icon 132c to the icon 132d. In this case, as shown in Fig. 7, the icons displayed in the launcher display picture 130 are moved counterclockwise in the circumferential direction. In particular, whereas the icon 132a shown in Fig. 6 is slid out from the launcher display picture 130, an icon 132e (see Fig. 7) relating to temperature adjustment of the seat is slid into the launcher display picture 130. Furthermore, the icon 132d that has been newly selected by the rider comes to be located at the center of the launcher display picture 130 in the horizontal direction D1.

As described above, the control unit 24 receives, from the handle switch 3, an operation signal corresponding to an operation by the rider on the rightward button 35. Then the control unit 24 changes the icons displayed in the launcher display picture 130 by moving the icons displayed in the launcher display picture 130 in the circumferential direction according to the operation signal.

In the launcher display picture 130 shown in Fig. 6, the icon 132c is an icon (an example of the term "first icon") that is selected by the rider currently. The icon 132a is an icon (an example of the term "second icon") that was selected by the rider last time. The icon 132d is an icon (an example of the term "third icon") to be selected by the rider next time. The operability of the display system 2 is high because these three icons, that is, the icon selected by the rider currently, the icon that was selected by the rider last time, and the icon to be selected by the rider next time, are displayed in the launcher display picture 130. Furthermore, the icon 132c selected currently is located between the icon 132a that was selected last time and the icon to be selected next time in the horizontal direction D1. This allows the rider to recognize, intuitively, the icon selected currently, the icon that was selected last time, and the icon to be selected next time, whereby the operability of the display system 2 is increased.

In this example, when the rightward button 35 is pressed by the rider, the icons displayed in the launcher display picture 130 are moved counterclockwise in the circumferential direction. On the other hand, when the leftward button 34 is pressed by the rider, the icons displayed in the launcher display picture 130 are moved clockwise in the circumferential direction.

According to the embodiment, the display mode of the display unit 20 can be switched to the first display mode in which a meter display picture 100 is displayed or the second display mode in which a meter display picture 100 and a launcher display picture 130 are displayed according to an operation made by the rider on the handle switch 3. The usability of the display system 2 can be increased because in this manner a launcher display picture 130 in which icons each of which is correlated with a function of the portable terminal 30 or a function of the vehicle 1 can be displayed on the display unit 20.

According to the embodiment, the display system 2 can be increased in convenience and operability because the display mode of the display unit 20 is switched in response to one short push operation on the home button 31.

In the embodiment, when the display mode of the display unit 20 is switched from the first display mode to the second display mode, the launcher display picture 130 is superimposed on the meter display picture 100 in such a manner that the display area of the meter display picture 100 is kept approximately the same. This alleviates strangeness that the rider may be given at the time of switching of the display mode. More specifically, strangeness that the rider may be given can be alleviated because the display positions of at least the speedometer 121 and the tachometer 120 remain the same.

Furthermore, the operability of the display system 2 can be increased because the icons displayed in a launcher display picture 130 can be moved in the circumferential direction by the rider's manipulating the handle switch 3.

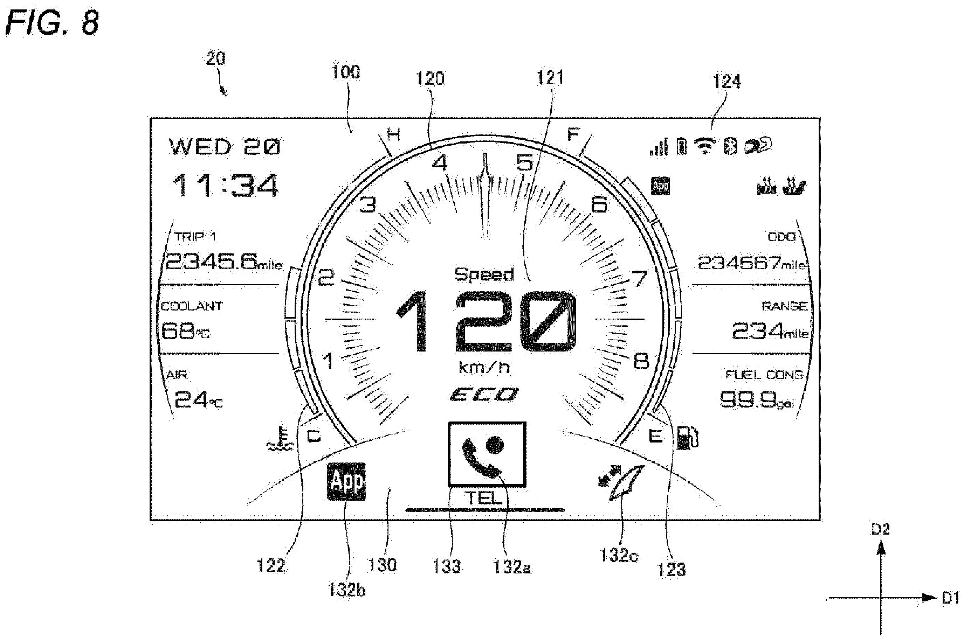

In the embodiment, the icon selected currently by the rider is displayed at the center of the launcher display picture 130 in the horizontal direction D1 in an emphasized manner. More specifically, the size of the icon 132c selected currently by the rider as shown in Fig. 6 is larger than that of the icon 132c shown in Fig. 5. The rider can immediately recognize the currently selected icon by seeing this size change of the icon. Furthermore, the display system 2 may display the currently selected icon 132a in an emphasized manner by displaying a frame 133 that surrounds the icon 132a in the launcher display picture 130 as shown in Fig. 8.

### (Call arrival notification picture 140)

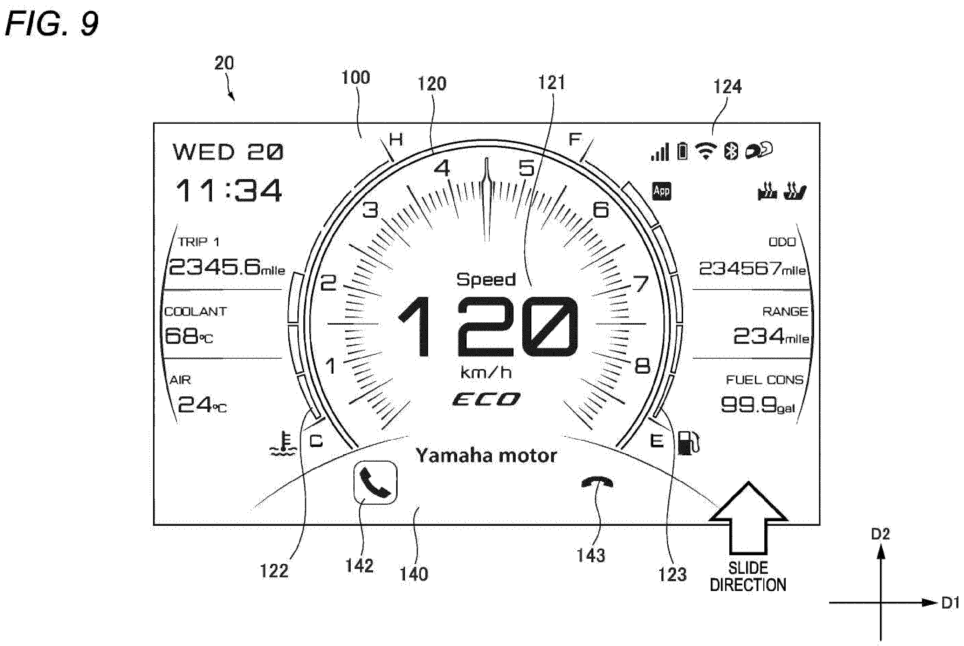

Next, a call arrival notification picture 140 that is displayed on the display unit 20 will be described below with reference to Figs. 4 and 9. Fig. 9 shows an example meter display picture 100 and an example call arrival notification picture 140 that are displayed on the screen of the display unit 20.

The control unit 24 receives a call arrival signal indicating arrival of a telephone call from the portable terminal 30 and displays a meter display picture 100 and a call arrival notification picture 140 on the screen of the display unit 20 in response to the call arrival signal. That is, the control unit 24 switches the display mode of the display unit 20 from the first display mode shown in Fig. 4 to a third display mode shown in Fig. 9 in response to reception of the call arrival signal. In the third display mode of the display unit 20, as shown in Fig. 9, the meter display picture 100 and the call arrival notification picture 140 are displayed on the screen of the display unit 20.

When the display mode of the display unit 20 is switched from the first display mode to the third display mode, the call arrival notification picture 140 slides into the meter display picture 100 in the vertical direction D2. The slide-in operation of the call arrival notification picture 140 allows the rider to immediately recognize the switching of the display mode of the display unit 20 from the first display mode to the third display mode.

The call arrival notification picture 140 is superimposed on the meter display picture 100 in such a manner that the display area of the meter display picture 100 is kept approximately the same as in the first display mode. More specifically, as shown in Figs. 4 and 9, the call arrival notification picture 140 is superimposed on the meter display picture 100 in such a manner that the display regions of the speedometer 121 and the tachometer 120 of the meter display picture 100 are kept as they are. On the other hand, the display positions of the coolant temperature meter 122 and the residual fuel meter 123 are changed and the drive mode display mark 128 is hidden by the call arrival notification picture 140. More specifically, the coolant temperature meter 122 and the residual fuel meter 123 are moved toward the top edge of the screen of the display unit 20.

A call response icon 142 and a call refusal icon 143 are displayed in the call arrival notification picture 140. When the rider has operated the call response icon 142 using the enter button 32 of the handle switch 3, the control unit 24 transmits a call response signal to the portable terminal 30 as a response to the incoming call. Then voice data of a caller received by the portable terminal 30 is transmitted to the display system 2 and a corresponding voice is output from headphones that are installed in a helmet (not shown). The headphones installed in the helmet may be connected to the communication unit 22 either wirelessly or by wire. Voice data of a voice of the rider is generated by a microphone installed in the helmet and is transmitted to the portable terminal 30 via the display system 2. On the other hand, when the rider has operated the call refusal icon 143 using the enter button 32 of the handle switch 3, the control unit 24 transmits a call refusal signal indicating refusal to respond to the call to the portable terminal 30

When the rider has operated the enter button 32 in a state that the call response icon 142 or the call refusal icon 143 is selected, the display mode of the display unit 20 is switched from the third display mode shown in Fig. 9 to the first display mode shown in Fig. 4. That is, the control unit 24 switches the display mode of the display unit 20 from the third display mode shown in Fig. 9 to the first display mode shown in Fig. 4 in response to an operation made by the rider on the enter button 32. In this case, the call arrival notification picture 140 may be slid out from the meter display picture 100 in the vertical direction D2.

According to the embodiment, the display mode of the display unit 20 can be switched from the first display mode in which a meter display picture 100 is displayed to the third display mode in which a meter display picture 100 and a call arrival notification picture 140 are displayed in response to reception of a call arrival signal indicating arrival of a call from the portable terminal 30. The usability of the display system 2 can be increased because in this manner a call arrival notification picture 140 can be displayed on the display unit 20 in response to reception of a call arrival signal.

In the embodiment, a call arrival notification picture 140 may indicate not only arrival of a telephone call but also arrival of a text message or a voice call transmitted by an SNS (social networking service) such as LINE (registered trademark), Facebook (registered trademark), or Twitter (registered trademark).

### DESCRIPTION OF REFERENCE NUMERALS

1: Straddled vehicle (vehicle)
2: Display system
3: Handle switch
4: Vehicle control unit
5: Vehicle speed sensor
6: Drive source
7: Drive source rotation speed sensor
8: Coolant temperature sensor
9: Fuel gauge sensor
20: Display unit
22: Communication unit
23: Input/output interface
24: Control unit
30: Portable terminal
31: Home button
32: Enter button
33: Upward button
34: Leftward button
35: Rightward button
36: Downward button
39: Housing
40: Wireless base station
50: IP network
60: External server
100: Meter display picture
120: Tachometer
121: Speedometer
122: Coolant temperature meter
123: Residual fuel meter
128: Drive mode display mark
130: Launcher display picture
132a-132e: Icons
140: Call arrival notification picture
142: Call response icon
143: Call refusal icon

## Claims

1. A display system (2) configured to be installed in a straddled vehicle (1), the display system comprising:
a display unit (20); and
a communication unit (22) configured to be communicably connectable to a portable terminal (30),
wherein the display system (2) is **characterised in that** it is configured to:
switch a display mode of the display unit (20) to a first display mode or a second display mode in response to an operation performed by a rider on a handle switch (3) of the vehicle (1);
display a meter display picture (100) representing running information of the vehicle (1) on the display unit (20) in the first display mode; and
display the meter display picture (100) and a launcher display picture (130) on the display unit (20) in the second display mode,
wherein at least a portion of a plurality of icons (132a to 132e) is displayed in the launcher display picture (130) so as to be arranged in a certain direction, and
wherein each of the icons is associated with a function of the portable terminal (30) or a function of the vehicle (1).

2. The display system (2) according to claim 1, wherein the display system (2) is configured to switch the display mode of the display unit (20) to the first display mode or the second display mode in response to one operation performed by the rider on the handle switch (3).

3. The display system (2) according to claim 1 or 2, wherein the certain direction is a circumferential direction.

4. The display system (2) according to any one of claims 1 to 3, wherein when the display mode is switched from the first display mode to the second display mode, the display system (2) is configured to superimpose the launcher display picture (130) on the meter display picture (100) such that a display area of the meter display picture (100) is kept approximately the same as in the first display mode.

5. The display system (2) according to claim 4, wherein when the display mode is switched from the first display mode to the second display mode, the display system (2) is configured to superimpose the launcher display picture (130) on the meter display picture (100) such that a speed display region, in which speed information of the vehicle is displayed, of the meter display picture (100) is kept as it is.

6. The display system (2) according to claim 4 or 5, wherein when the display mode is switched from the first display mode to the second display mode, the display system (2) is configured to change display positions of running information of the vehicle (1) other than the speed information of the vehicle (1) in the meter display picture (100).

7. The display system (2) according to any one of claims 1 to 6, wherein the display system (2) is configured to provide the icons (132a to 132e) that include one or more icons that are displayed in the launcher display picture (130) and one or more icons that are not displayed in the launcher display picture (130).

8. The display system (2) according to any one of claims 1 to 7, wherein the display system (2) is configured to change the icons displayed in the launcher display picture (130) by moving the icons in the certain direction in response to an operation performed by the rider on the handle switch (3).

9. The display system (2) according to any one of claims 1 to 8, wherein the display system (2) is configured to display an icon currently selected by the rider at the center of the launcher display picture (130) in a horizontal direction (D1) of the display unit (20).

10. The display system (2) according to any one of claims 1 to 9, wherein the display system (2) is configured to display an icon currently selected by the rider is opposed to a speed display region in which speed information of the vehicle (1) in a vertical direction (D2) of the display unit (20).

11. The display system (2) according to any one of claims 1 to 10, wherein the display system (2) is configured to display a first icon currently selected by the rider, a second icon that was selected by the rider last time, and a third icon to be selected by the rider next time so as to be arranged in the certain direction in the launcher display picture (130).

12. The display system (2) according to claim 11, wherein the display system (2) is configured to dispose the first icon between the second icon and the third icon.

13. The display system (2) according to claim 11 or 12, wherein the display system (2) is configured to display the first icon in an emphasized manner in the second display mode.

14. The display system (2) according to any one of claims 1 to 13, wherein when the display mode is switched from the first display mode to the second display mode, the display system (2) is configured to slid the launcher display picture (130) into the meter display picture (100).

15. The display system (2) according to any one of claims 1 to 14, wherein when the display mode is switched from the second display mode to the first display mode, the display system (2) is configured to slid the launcher display picture (130) out from the meter display picture (100).

16. The display system (2) according to any one of claims 1 to 15, wherein when the handle switch (3) has not been operated by the rider for a certain period in the second display mode, the display system (2) is configured to switch the display mode automatically from the second display mode to the first display mode.

17. The display system (2) according to any one of claims 1 to 16, wherein the display system (2) is configured to associate the icons (132a to 132e) with different functions.

18. A straddled vehicle (1) comprising the display system (2) according to any one of claims 1 to 17.

## Patentansprüche

1. Ein Anzeigesystem (2), das konfiguriert ist, um in einem Spreiz-Sitz-Fahrzeug (1) installiert zu werden, das Anzeigesystem umfasst:
eine Anzeigeeinheit (20); und
eine Kommunikationseinheit (22), die konfiguriert ist, um kommunikativ mit einem tragbaren Endgerät (30) verbunden zu werden,
wobei das Anzeigesystem (2) **dadurch gekennzeichnet ist, dass** es konfiguriert ist, um:
einen Anzeigemodus der Anzeigeeinheit (20) auf einen ersten Anzeigemodus oder einen zweiten Anzeigemodus als Reaktion auf eine Betätigung eines Fahrers an einem Griffschalter (3) des Fahrzeugs (1) umzuschalten anzuzeigen;
eine Mess-Anzeigebild (100), das Fahrinformationen des Fahrzeugs (1) darstellt, auf der Anzeigeeinheit (20) im ersten Anzeigemodus; und
das Mess-Anzeigebild (100) und ein Starter-Anzeigebild (130) auf der Anzeigeeinheit (20) im zweiten Anzeigemodus anzuzeigen,
wobei zumindest ein Teil einer Mehrzahl von Symbolen (132a bis 132e) in dem Starter-Anzeigebild (130) angezeigt wird, so dass sie in einer bestimmten Richtung angeordnet sind, und
wobei jedes der Symbole mit einer Funktion des tragbaren Endgeräts (30) oder einer Funktion des Fahrzeugs (1) zugeordnet ist.

2. Das Anzeigesystem (2) gemäß Anspruch 1, wobei das Anzeigesystem (2) konfiguriert ist, um den Anzeigemodus der Anzeigeeinheit (20) in den ersten Anzeigemodus oder den zweiten Anzeigemodus als Reaktion auf eine Betätigung, die vom Fahrer am Griffschalter (3) ausgeführt ist, umzuschalten.

3. Das Anzeigesystem (2) gemäß Anspruch 1 oder 2, wobei die bestimmte Richtung eine Umfangsrichtung ist.

4. Das Anzeigesystem (2) gemäß irgendeinem der Ansprüche 1 bis 3, wobei, wenn der Anzeigemodus von dem ersten Anzeigemodus in den zweiten Anzeigemodus umgeschaltet wird, das Anzeigesystem (2) konfiguriert ist, um das Starter-Anzeigebild (130) dem Mess-Anzeigebild (100) zu überlagern, so dass ein Anzeigebereich des Mess-Anzeigebildes (100) ungefähr gleich wie im ersten Anzeigemodus gehalten wird.

5. Das Anzeigesystem (2) gemäß Anspruch 4, wobei, wenn der Anzeigemodus von dem ersten Anzeigemodus in den zweiten Anzeigemodus umgeschaltet wird, das Anzeigesystem (2) konfiguriert ist, um das Starter-Anzeigebild (130) dem Mess-Anzeigebild (100) zu überlagern, so dass ein Geschwindigkeits-Anzeigebereich, in dem Geschwindigkeitsinformationen des Fahrzeugs angezeigt ist, des Mess-Anzeigebildes (100) unverändert beibehalten wird.

6. Das Anzeigesystem (2) gemäß Anspruch 4 oder 5, wobei, wenn der Anzeigemodus von dem ersten Anzeigemodus in den zweiten Anzeigemodus umgeschaltet wird, das Anzeigesystem (2) konfiguriert ist, um die Anzeigepositionen von anderen Fahrinformationen des Fahrzeugs (1) als den Geschwindigkeitsinformationen des Fahrzeugs (1) in dem Mess-Anzeigebild (100) zu ändern.

7. Das Anzeigesystem (2) gemäß irgendeinem der Ansprüche 1 bis 6, wobei das Anzeigesystem (2) konfiguriert ist, um die Symbole (132a bis 132e) bereitstellt, die ein oder mehrere Symbole, die in dem Starter-Anzeigebild (130) angezeigt werden, und ein oder mehrere Symbole, die nicht in dem Starter-Anzeigebild (130) angezeigt werden, beinhalten.

8. Das Anzeigesystem (2) gemäß irgendeinem der Ansprüche 1 bis 7, wobei das Anzeigesystem (2) konfiguriert ist, um die Symbole, die im Starter-Anzeigebild (130) angezeigt sind, zu ändern, indem es die Symbole als Reaktion auf eine vom Fahrer am Griffschalter (3) ausgeführte Betätigung in eine bestimmte Richtung bewegt.

9. Das Anzeigesystem (2) gemäß irgendeinem der Ansprüche 1 bis 8, wobei das Anzeigesystem (2) konfiguriert ist, um ein Symbol, das aktuell vom Fahrer ausgewählt ist, in der Mitte des Starter-Anzeigebildes (130) in einer horizontalen Richtung (D1) der Anzeigeeinheit (20) anzuzeigen.

10. Das Anzeigesystem (2) gemäß irgendeinem der Ansprüche 1 bis 9, wobei das Anzeigesystem (2) konfiguriert ist, um ein Symbol, das aktuell vom Fahrer ausgewählt ist, gegenüberliegend zu einem Geschwindigkeits-Anzeigebereich, in dem Geschwindigkeits-Informationen des Fahrzeugs (1) in einer vertikalen Richtung (D2) der Anzeigeeinheit (20) angezeigt werden, anzuzeigen.

11. Das Anzeigesystem (2) gemäß irgendeinem der Ansprüche 1 bis 10, wobei das Anzeigesystem (2) konfiguriert ist, um ein erstes Symbol, das aktuell vom Fahrer ausgewählt ist , ein zweites Symbol, das beim letzten Mal vom Fahrer ausgewählt wurde, und ein drittes Symbol, das beim nächsten Mal vom Fahrer ausgewählt werden soll, so anzeigt, dass sie in der bestimmten Richtung im Starter-Anzeigebild (130) angeordnet sind.

12. Das Anzeigesystem (2) gemäß Anspruch 11, wobei das Anzeigesystem (2) konfiguriert ist, um das erste Symbol zwischen dem zweiten Symbol und dem dritten Symbol anzuordnen.

13. Das Anzeigesystem (2) gemäß Anspruch 11 oder 12, wobei das Anzeigesystem (2) konfiguriert ist, um das erste Symbol im zweiten Anzeigemodus hervorgehoben anzuzeigen.

14. Das Anzeigesystem (2) gemäß irgendeinem der Ansprüche 1 bis 13, wobei, wenn der Anzeigemodus vom ersten Anzeigemodus in den zweiten Anzeigemodus umgeschaltet wird, das Anzeigesystem (2) konfiguriert ist, um das Starter-Anzeigebild (130) in das Mess-Anzeigebild (100) zu schieben.

15. Das Anzeigesystem (2) gemäß irgendeinem der Ansprüche 1 bis 14, wobei, wenn der Anzeigemodus von dem zweiten Anzeigemodus auf den ersten Anzeigemodus umgeschaltet wird, das Anzeigesystem (2) konfiguriert ist, um das Starter-Anzeigebild (130) aus dem Mess-Anzeigebild (100) heraus zu schieben.

16. Das Anzeigesystem (2) gemäß irgendeinem der Ansprüche 1 bis 15, wobei, wenn der Griffschalter (3) im zweiten Anzeigemodus eine bestimmte Zeit lang nicht vom Fahrer betätigt worden ist, das Anzeigesystem (2) konfiguriert ist, um den Anzeigemodus automatisch vom zweiten Anzeigemodus auf den ersten Anzeigemodus umzuschalten.

17. Das Anzeigesystem (2) gemäß irgendeinem der Ansprüche 1 bis 16, wobei das Anzeigesystem (2) konfiguriert ist, um die Symbole (132a bis 132e) mit verschiedenen Funktionen zu verknüpfen.

18. Ein Spreiz-Sitz-Fahrzeug (1), welches das Anzeigesystem (2) gemäß irgendeinem der Ansprüche 1 bis 17 umfasst.

## Revendications

1. Système d'affichage (2) configuré pour être installé dans un véhicule à califourchon (1), le système d'affichage comprenant:
une unité d'affichage (20); et
une unité de communication (22) configurée se connecter à un terminal portable (30) et communiquer avec celui-ci,
dans lequel le système d'affichage (2) est **caractérisé en ce qu'**il est configuré pour qu'un mode d'affichage de l'unité d'affichage (20) passe à un premier mode d'affichage ou un second mode d'affichage en réponse à une opération effectuée par un conducteur sur un commutateur (3) situé sur le guidon du véhicule (1);
afficher une image d'affichage de compteur (100) comportant des informations de fonctionnement du véhicule (1) à l'unité d'affichage (20) dans le premier mode d'affichage; et
afficher l'image d'affichage du compteur (100) et une image d'affichage du lanceur (130) sur l'unité d'affichage (20) dans le second mode d'affichage,
dans lequel au moins une partie d'une pluralité d'icônes (132a à 132e) est affichée dans l'image d'affichage du lanceur (130) de manière à être disposée dans une certaine direction, et
dans lequel chacune des icônes est associée à une fonction du terminal portable (30) ou à une fonction du véhicule (1).

2. Système d'affichage (2) selon la revendication 1, dans lequel le système d'affichage (2) est configuré pour que le mode d'affichage de l'unité d'affichage (20) passe en premier mode d'affichage ou second mode d'affichage en réponse à une opération effectuée par le conducteur sur le commutateur (3) situé sur le guidon.

3. Système d'affichage (2) selon les revendications 1 ou 2, dans lequel la direction voulue est une direction circonférentielle.

4. Système d'affichage (2) selon l'une quelconque des revendications 1 à 3, dans lequel, lorsque le mode d'affichage passe du premier mode d'affichage au second mode d'affichage, le système d'affichage (2) est configuré pour superposer l'image d'affichage du lanceur (130) sur l'image d'affichage du compteur (100) de telle sorte qu'une zone d'affichage de l'image d'affichage du compteur (100) est maintenue sensiblement identique à celle du premier mode d'affichage.

5. Système d'affichage (2) selon la revendication 4, dans lequel lorsque le mode d'affichage passe du premier mode d'affichage au second mode d'affichage, le système d'affichage (2) est configuré pour superposer l'image d'affichage du lanceur (130) sur l'image d'affichage du compteur (100) de sorte qu'une zone d'affichage de la vitesse, dans laquelle les informations de vitesse du véhicule sont affichées, de l'image d'affichage du compteur (100) est conservée en l'état.

6. Système d'affichage (2) selon les revendications 4 ou 5, dans lequel lorsque le mode d'affichage passe du premier mode d'affichage au second mode d'affichage, le système d'affichage (2) est configuré pour changer les positions d'affichage des informations de fonctionnement du véhicule (1) autres que les informations de vitesse du véhicule (1) dans l'image d'affichage du compteur (100).

7. Système d'affichage (2) selon l'une quelconque des revendications 1 à 6, dans lequel le système d'affichage (2) est configuré pour présenter les icônes (132a à 132e) qui comprennent une ou plusieurs icônes qui sont affichées dans l'image d'affichage du lanceur (130) et une ou plusieurs icônes qui ne sont pas affichées dans l'image d'affichage du lanceur (130).

8. Système d'affichage (2) selon l'une quelconque des revendications 1 à 7, dans lequel le système d'affichage (2) est configuré pour changer les icônes affichées dans l'image d'affichage du lanceur (130) en déplaçant les icônes dans la direction voulue en réponse à une opération effectuée par le conducteur sur le commutateur (3) situé sur le guidon.

9. Système d'affichage (2) selon l'une quelconque des revendications 1 à 8, dans lequel le système d'affichage (2) est configuré pour afficher une icône actuellement sélectionnée par le conducteur au centre de l'image d'affichage du lanceur (130) dans une direction horizontale (D1) de l'unité d'affichage (20).

10. Système d'affichage (2) selon l'une quelconque des revendications 1 à 9, dans lequel le système d'affichage (2) est configuré pour afficher une icône actuellement sélectionnée par le conducteur est opposée à une zone d'affichage de vitesse dans laquelle des informations de vitesse du véhicule (1) dans une direction verticale (D2) de l'unité d'affichage (20).

11. Système d'affichage (2) selon l'une quelconque des revendications 1 à 10, dans lequel le système d'affichage (2) est configuré pour afficher une première icône actuellement sélectionnée par le conducteur, une deuxième icône qui a été sélectionnée par le conducteur la dernière fois, et une troisième icône à sélectionner par le conducteur la prochaine fois de manière à être disposée dans la direction voulue dans l'image d'affichage du lanceur (130).

12. Système d'affichage (2) selon la revendication 11, dans lequel le système d'affichage (2) est configuré pour disposer la première icône entre la deuxième icône et la troisième icône.

13. Système d'affichage (2) selon les revendications 11 ou 12, dans lequel le système d'affichage (2) est configuré pour afficher la première icône d'une manière accentuée dans le second mode d'affichage.

14. Système d'affichage (2) selon l'une quelconque des revendications 1 à 13, dans lequel lorsque le mode d'affichage passe du premier mode d'affichage au second mode d'affichage, le système d'affichage (2) est configuré pour faire glisser l'image d'affichage du lanceur (130) dans l'image d'affichage du compteur (100).

15. Système d'affichage (2) selon l'une quelconque des revendications 1 à 14, dans lequel lorsque le mode d'affichage passe du second mode d'affichage au premier mode d'affichage, le système d'affichage (2) est configuré pour faire glisser l'image d'affichage du lanceur (130) hors de l'image d'affichage du compteur (100).

16. Système d'affichage (2) selon l'une quelconque des revendications 1 à 15, dans lequel lorsque le commutateur (3) situé sur le guidon n'a pas été actionné par le conducteur pendant une certaine période dans le second mode d'affichage, le système d'affichage (2) est configuré pour que le mode d'affichage passe automatiquement du second mode d'affichage au premier mode d'affichage.

17. Système d'affichage (2) selon l'une quelconque des revendications 1 à 16, dans lequel le système d'affichage (2) est configuré pour associer les icônes (132a à 132e) à différentes fonctions.

18. Véhicule à califourchon (1) comprenant le système d'affichage (2) selon l'une quelconque des revendications 1 à 17.
